# EUROPEAN PATENT SPECIFICATION

(11) **EP 2 756 142 B1**
(45) Date of publication and mention of the grant of the patent: **18.11.2015**
(21) Application number: 12766402.7
(22) Date of filing: 14.09.2012
(51) Int. Cl.: E04C 5/16, F16B 7/04, F16B 37/08

(54) **COUPLING ASSEMBLY AND METHOD FOR COUPLING REINFORCING BARS**
KUPPLUNGSANORDNUNG UND VERFAHREN ZUR KOPPLUNG VON BEWEHRUNGSSTÄBEN
ENSEMBLE D'ACCOUPLEMENT ET PROCÉDÉ D'ACCOUPLEMENT DE BARRES D'ARMATURE

(30) Priority: 14.09.2011 GB 201115909
(43) Date of publication of application: 23.07.2014
(73) Proprietor: Bullivant, Simon, Tandragee, County Armagh BT62 2ED (GB)
(72) Inventor: Bullivant, Simon, Tandragee, County Armagh BT62 2ED (GB)
(74) Representative: Waller, Stephen
(86) International application number: PCT/EP2012/068073
(87) International publication number: WO 2013/037944

(56) References cited:
- EP-A1- 0 773 333
- DE-A1- 2 906 752
- KR-A- 20100 114 361
- KR-B1- 100 953 941
- KR-B1- 100 973 437
- US-A- 5 193 932
- US-A1- 2003 231 925
- US-A1- 2007 056 148

## Description

This invention relates to coupling device for coupling reinforcing bars or prestressing wires in end to end relationship, and more particularly to a coupling device for coupling reinforcing bars or prestressing wires in a concrete structure which does not require rotation of the bars or wires or require the use of any tools.

Generally reinforced concrete is concrete containing steel reinforcing bars (often abbreviated to "rebar"), whereby the concrete bears compressive forces and the reinforcing bars bear tensile forces. The term reinforcing bar used hereinafter is also intended to emcompass steel wires or tendons used to prestress a concrete structure.

It is often necessary to assemble separate precast concrete sections, for example in concrete piles, wherein it is necessary to interconnect multiple pile sections in end to end relationship as the pile is driven into the ground. In circumstances it is necessary to couple or splice together the reinforcing bars of adjacent concrete sections so that the reinforcing bars can resist tension and bending forces applied to the joint between the sections.

Many known methods of splicing together reinforcing bars typically require access to the ends of the bars for the use of tools to tighten threaded fasteners, to weld the ends of the bars together or to swage a connector device over the abutting ends of the bars. However, where abutting faces of adjacent concrete sections are flush fitting such access may not be available. This is a particular problem when joining reinforced concrete pile sections. Attempts to solve such problem have resulted in complex and costly arrangements, such as the ABB, Westpile or Kie-Lock joints, where specially shaped steel plates or castings are precast into the pile ends to define male and female couplings that are interconnected by locking pins or specially shaped connectors.

Known coupling assemblies are disclosed in US 2007/056148, KR 100 953 941, KR 100 973 437, DE 29 06 752 and US 2003/231925.

KR 2010 0114361 A discloses a couplings assembly according to the preamble of 1.

An object of the present invention is to provide a simple, cost effective and reliable way of coupling reinforcing bars of adjacent precast concrete sections which overcomes the above problems.

According to the present invention there is provided a coupling assembly for coupling reinforcing bars or prestessing wires in end to end relationship, as claimed in claim 1.

Preferably said co-operating retaining barbs or teeth are formed with a saw tooth profile to facilitate insertion of said male member into said female member while resisting removal of said male member from said female member once inserted therein.

The retaining barbs or teeth may be in the form of circumferentially extending axially spaced teeth or helically extending threads formed on respective ends of said first and second coupling parts.

The sleeve may be provided with a longitudinal slot extending along the length of the sleeve from end to end.

Said second coupling part may be coupled to an end of said second reinforcing bar by means of a further coupling part formed on or mounted on said end of said second reinforcing bar. The further coupling part and said second coupling part may define respective male and female members provided with co-operating retaining barbs or teeth, whereby said further coupling part, can be engaged with said second coupling part by relative axial displacement of said further and second coupling parts.

In one embodiment, the further coupling part may comprise a tubular member adapted to be mounted over said end of said second coupling part and to be secured thereto, for example by crimping, welding or adhesive.

Embodiments of the present invention will now be described, by way of example only, with reference to Figures 7 to 9 of the accompanying drawings, in which :-
Figure 1 is a longitudinal sectional view of a reinforcing bar coupling assembly not forming part of the present invention
Figure 2 is a detailed sectional view of the coupling assembly of Figure 1;
Figure 3 is a detailed view of the thread profile of the coupling assembly of Figure 1;
Figure 4 is an end view of the sleeve of the coupling assembly of Figure 1;
Figure 5 is a perspective view of a reinforced concrete pile assembly incorporating the reinforcing bar coupling assembly of Figure 1;
Figure 6 is a further perspective view of a reinforced concrete pile assembly incorporating the reinforcing bar coupling assembly of Figure 1;
Figure 7 longitudinal sectional view of a reinforcing bar coupling assembly according to the present invention;
Figure 8 is an exploded view of the coupling assembly of Figure 7; and
Figure 9 is a longitudinal sectional view through part of a coupling assembly in accordance with a further embodiment of the present invention for attachment to prestressing tendons or wires.

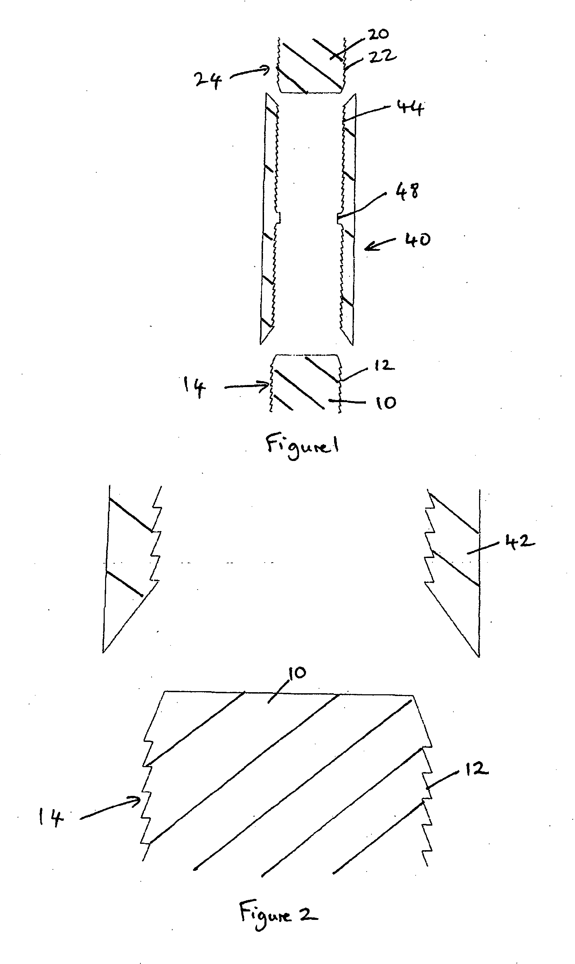

A coupling assembly for coupling adjacent ends of reinforcing bars in end to end relationship is illustrated in Figures 1 to 4. This coupling assembly does not fall within the scope of the claims.

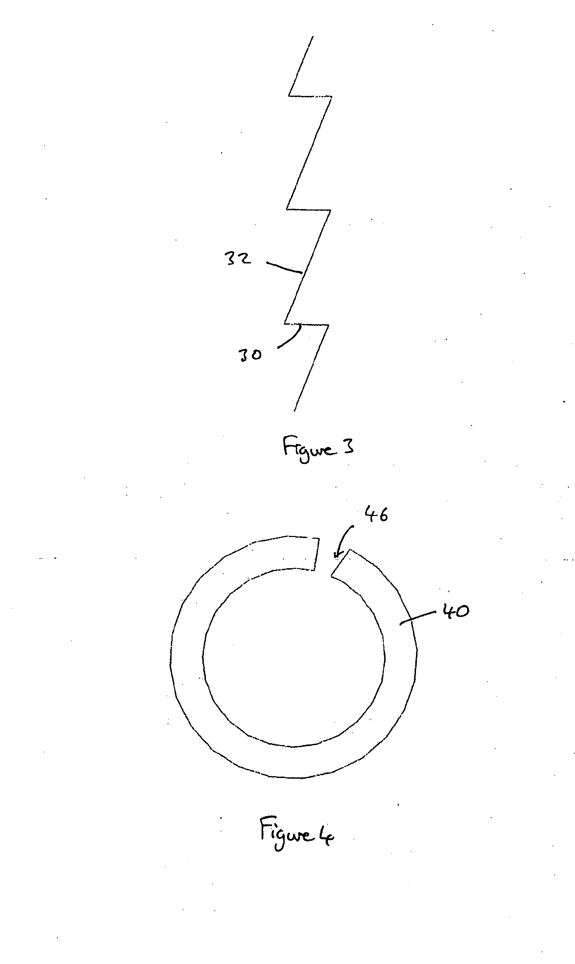

Coaxially arranged steel reinforcing bars 10,20 arranged to be coupled in end to end relationship have threads 12,22 or axially spaced circumferentially extending teeth cut or rolled into each end 14,24 thereof As best seen from Figure 3 the threads or teeth 12,22 of each end 14,24 of the respective bars 10,20 have a saw tooth profile, defining an inner flank 30 arranged substantially perpendicular to the axis of the bar and an outer flank 32 arranged at a relatively shallow angle to the axis of the bar:

The ends 14,24 of the bars 10,20 are coupled together by means of a tubular cylindrical sleeve 40 formed from a resilient material, such as spring steel, the sleeve 40 having internally threaded or toothed ends 42,44 shaped and dimensioned to engage the teeth or threads 12,22 of respective ends 14,24 of the bars 10,20.

The cross sectional profile of the ends 14,24 of each bar 10,20 and the corresponding portions 42,44 of the sleeve 40 are arranged such that the ends 14,24 of the bars 10,20 can be axially pushed into the corresponding ends 42,44 of the sleeve 40, the shallow angled outer flanks 32 of the threads or teeth formed on the ends 14,24 of the bars 10,20 and the co-operating threaded or toothed portions 42,44 of the sleeve 40 sliding past one another, while the perpendicular inner flanks 30 of the threads or teeth formed on the ends 14,24 of the bars and the corresponding threaded or toothed portions 42,44 of the sleeve 40 abut one another to prevent the ends of the bars 10,20 from being pulled out of the sleeve 40, once engaged therewith.

In this manner the sleeve 40 becomes a tensile extension of the reinforcing bars 10,20, coupling the sleeves 40 in coaxial end to end relationship, ensuring continuity of the coupled reinforcing bars.

As can be seen from 4, the sleeve 40 is provided with an axially extending slot 46 from end to end to allow the sleeve 40 to be expanded to assist insertion of the ends of the bars 10,20 into the sleeve 40.

As shown in Figures 1 and 2, the ends 14,24 of the bars 10,20 and the sleeve 40 are chamfered to assist insertion of the threaded ends 14,24 of the bars 10,20 into the sleeve 40.

An internally projecting shoulder or stop 48 may be provided in a central region of the sleeve 40 to limit the insertion depth of the bars 10,20 into the sleeve 40.

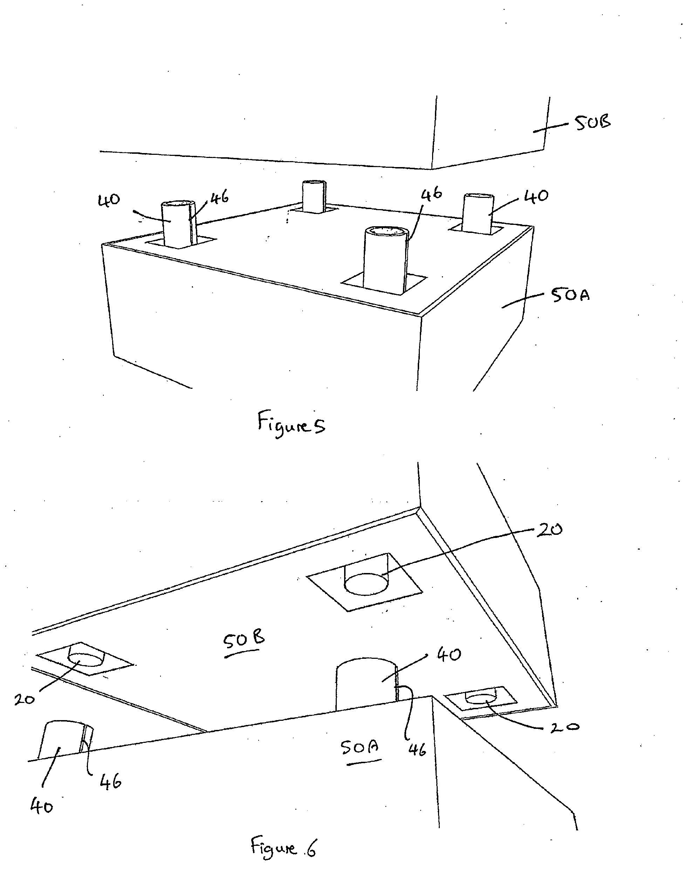

The use of the coupling assembly of Figures 1 to 4 to couple reinforcing bars of precast concrete pile sections is illustrated in Figures 5 and 6.

As can be seen from Figure 6, a sleeve 40 is first engaged with each end of the reinforcing bars 10 of the lower pile section 50A. Where the ends of the bars and corresponding portions of the sleeves 40 are threaded, the sleeves 40 may be engaged with the lower reinforcing bars 10 by screwing the sleeves 40 onto the bars 10.

As the upper pile section 50B is lowered onto the lower pile section 50A, the ends 24 of the reinforcing bars 20 of the upper pile section 50B are guided into the upper ends of the sleeves 40. Subsequently the weight of the upper pile section 50B causes the ends of the reinforcing bars 20 to be forced into the upper ends of the sleeves 40, the axial slot 46 in each sleeve 40 allowing the sleeves 40 to expand to permit the sloping flanks 32 of the threads or teeth to slide past one another such that the threaded or toothed formations of the ends 24 of the bars 20 to engage the corresponding threaded or toothed ends of the sleeves 40 by relative axial displacement of the bars and sleeves.

Once the ends 24 of the bars 20 are engaged within the co-operating portions of the corresponding sleeves 40, the perpendicular flanks 30 of the thread or teeth engage one another to prevent the bars 20 from being pulled out of the sleeves 40, thus enabling the coupled bars 10,20 to withstand tensile forces.

Once the pile sections 50A, 50B are assembled, any remaining voids around the coupling assemblies may be filled by an epoxy, resin or cement filler/adhesive.

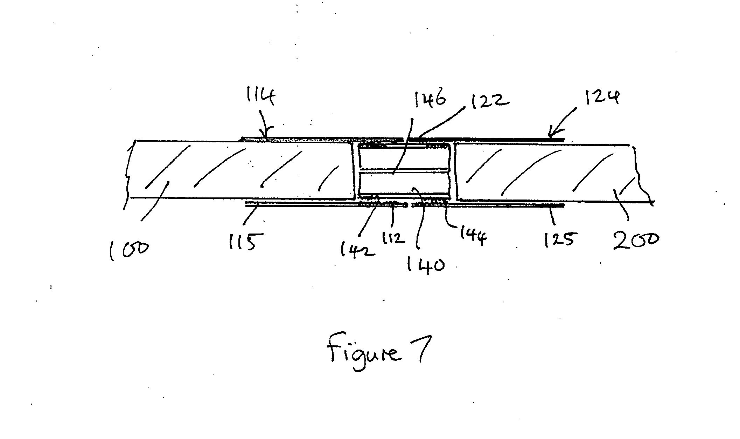

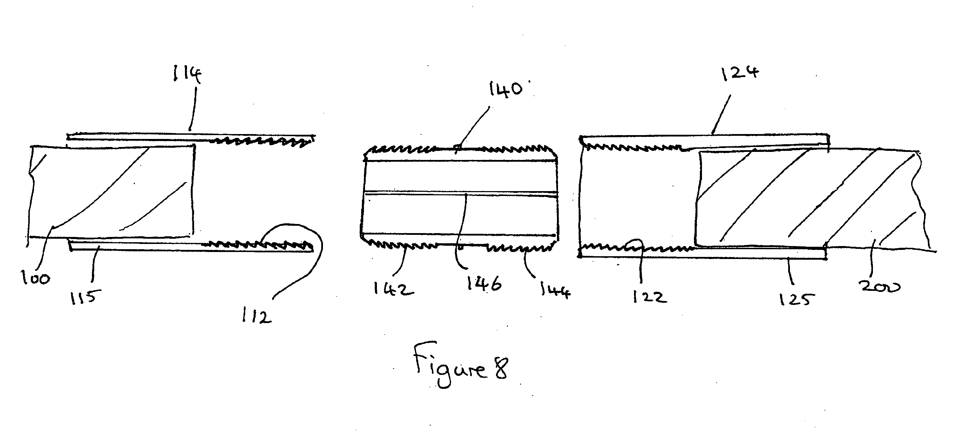

A coupling assembly in accordance with an embodiment of the present invention is illustrated in Figures 7 and 8.

In the example illustrated in Figures 1 to 6 it is necessary to form saw tooth shaped teeth or threads in the end portions 14,14 of the reinforcing bars 10,20. Where the reinforcing bars are formed from low grade or recycled materials such may cause difficulties. Furthermore, the requirement to cut threads or teeth into the ends of the reinforcing bars and also makes the coupling assembly unsuitable for use with prefabricated pile structures without first machining the ends of the reinforcing bars.

In a coupling assembly in accordance with an embodiment of the invention, illustrated in Figures 7 and 8, this problem is solved by providing a three part coupling assembly comprising a pair of tubular coupling members 114,124 adapted to be fitted over respective ends of adjacent reinforcing bars 100,200, each tubular coupling member 114,124 having a first end defining a tubular portion 115,125 for receiving an end of a respective reinforcing bar 100,200 and a second end adapted to receive a co-operating end of a coupler in the form of a sleeve 140, the respective second ends of the respective coupling members 114,124 and the co-operating portions of the sleeve 140 having co-operating saw-tooth profile toothed or threaded portions 112,122,142,144 such that the reinforcing bars 100,200 can be coupled by relative axial displacement of the coupling members 114,124 and sleeve 140, as will be described in more detail below.

The tubular first end 115,125 of each coupling member 114,124 may be secured onto the end of the respective reinforcing bar 100,200 by crimping. Alternatively the coupling members 114,124 may be secured to the ends of the reinforcing bars by welding or suitable adhesive.

The second end of each coupling member 114,124 defines a female coupling part having a saw tooth profile toothed or threaded portion 112,122 formed internally therein adapted to receive a respective end of the sleeve 140. Co-operating external toothed or threaded regions 142,144 of the sleeve 140 engage the toothed or threaded portions 112,122 of the respective coupling member 114,124 to retain the sleeve 14 within the coupling members 114,124, thus securing the ends of the reinforcing bars together.

The sleeve 140 may be formed from spring steel and is provided with an axially extending slot 146 enabling the sleeve 146 to be radially compressed to assist insertion of the ends of the sleeve 140 into the receiving female portions of the coupling members 114,124.

It is envisaged that the sleeve 140 may be fitted directly to the end of one of the reinforcing to be coupled, for example by crimping the sleeve over the end of the bar, the other end of the sleeve being coupled to the end of the other reinforcing bar by means of a coupling member as described above (or by providing a threaded or toothed end on the other bar to be received in the sleeve).

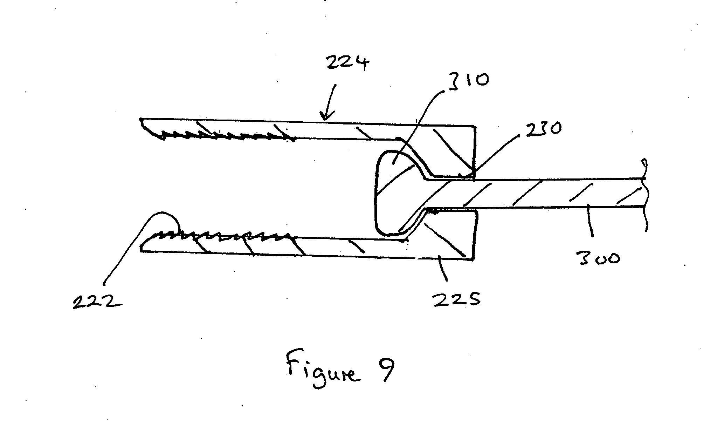

The coupling assembly according to the present invention may also be used to couple steel wires or tendons used to prestress concrete structures. Such wires are typically much thinner than reinforcing bars and are generally under greater tension. Therefore it is generally not possible to form teeth or threads in the ends of the wires, as in the coupling assembly shown in Figures 1 to 6, or to simply crimp the coupling members onto the ends of the wires, as in the embodiment shown in Figures 7 and 8. In a modified embodiment, shown in Figure 9, the coupling assembly comprises a pair of coupling members 224 (only one) that can be attached to the respective ends of adjacent prestressing wires to be coupled, each coupling member 224 having teeth or threads 222 formed on an inner face thereof for engagement with a coupling sleeve (not shown) in the same manner as the coupling assembly of Figures 7 and 8.

In this modified embodiment, an end 225 of each coupling member 224, opposite the toothed or threaded portion 222, comprises a through bore with a narrowed neck region 230 through which the prestressing wire 300 can pass with a close fit. Once it has been passed though the neck region 230 of the coupling member 224, the distal end 310 of the wire can be peened or otherwise formed into a widened button head region, having a diameter greater than that of the neck region 230 to retain the coupling member 224 onto the wire 300.

The invention is not limited to the embodiment described herein but can be amended or modified without departing from the scope of the present invention as defined by the claims. Whilst coupling assemblies in accordance with the present invention have been described in relation to the coupling of reinforcing bars and prestressing wires extending between abutting reinforced concrete structures, a coupling assembly in accordance with the present invention may be used to couple reinforcing bar sections or prestressing wires within a reinforced concrete structure prior to casting or in other applications wherein it is desired to couple coaxially arranged reinforcing bars or wires, particularly, but not exclusively, in concrete structures. Furthermore, while the present invention has been described in relation to the coupling of steel reinforcing bars it may also be used to couple reinforcing bars made from other materials, such as composite materials, including fibre reinforced polymer (FRP) bars. It is also envisaged that the coupling assembly according to the present invention may be utilised to couple coaxially arranged bars, rods or wires in many other applications.

## Claims

1. A coupling assembly for coupling reinforcing bars or prestressing wires in end to end relationship, said assembly comprising a first coupling part (114) adapted to be mounted on an end of a first reinforcing bar (100) and a second coupling part (140) adapted to be mounted on, or otherwise adapted to be coupled to, an end of a second reinforcing bar (200) adjacent said end of said first reinforcing bar (100), said first and second coupling parts (114,140) comprising respective male and female members provided with co-operating retaining barbs or teeth (112,142), **characterised in that** said first coupling part (114) can be engaged with said second coupling part (140) to couple said first and second reinforcing bars (100,200) by relative axial displacement of said first and second reinforcing bars (100,200) without rotation thereof, said second coupling part (140) comprising an elongate sleeve, said first coupling part (114) comprises a tubular member adapted to be mounted over said end of said first reinforcing bar (100) and to be secured thereto, for example by crimping, welding or adhesive, and wherein the or each end of the sleeve (140) is provided with at least one axially extending slot (146) to permit radial compression thereof to enable said first coupling part (114) to be engaged with said second coupling part (140) by respective axial displacement of said first and second coupling parts (114,140), at least a portion (115) of said first coupling part (114) being adapted to be received over said end of said first reinforcing bar (100) to secure the first coupling part (114) thereon, wherein retaining barbs or teeth (142) are formed externally at one end of said sleeve (140) defining said second coupling part, said retaining barbs or teeth (142) being engageable with co-operating retaining barbs or teeth (112) formed internally on an end of said tubular member defining said first coupling part (114).

2. A coupling assembly as claimed in claim 1, wherein said co-operating retaining barbs or teeth (112,142) are formed with a saw tooth profile to facilitate insertion of said second coupling part (140) into said first coupling part (114) while resisting removal of said second coupling part (140) from said first coupling part (114) once inserted therein.

3. A coupling assembly as claimed in claim 1, wherein said co-operating retaining barbs or teeth (112,142) are in the form of circumferentially extending axially spaced teeth or helically extending threads formed on respective ends of said first and second coupling parts (114,140).

4. A coupling assembly as claimed in any preceding claim, wherein the sleeve (140) is provided with a longitudinal slot (146) extending along the length of the sleeve (140) from end to end.

5. A coupling assembly as claimed in any preceding claim, wherein said second coupling part (140) is coupled to said end of said second reinforcing bar (200) by means of a further coupling part (124) mounted on said end of said second reinforcing bar (200).

6. A coupling assembly as claimed in claim 5, wherein said further coupling part (124) and said second coupling part (140) define respective male and female members provided with co-operating retaining barbs or teeth (122,144), whereby said further coupling part (124) can be engaged with said second coupling (140) part by relative axial displacement of said further and second coupling parts (124,140).

7. A coupling assembly as claimed in claim 6, wherein said further coupling part (124) comprises a tubular member adapted to be mounted over said end of said second coupling part (140) and to be secured thereto, for example by crimping, welding or adhesive.

## Patentansprüche

1. Kupplungsanordnung zum Koppeln von Armierungsstäben oder Spanndrähten in Stoßbeziehung, wobei die Anordnung Folgendes umfasst: ein erstes Kupplungsteil (114), das dazu angepasst ist, an einem Ende einer ersten Armierungsstabs (100) angebracht zu werden und ein zweites Kupplungsteil (140), das dazu angepasst ist, an einem Ende eines zweiten Armierungsstabs (200) benachbart dem Ende des ersten Armierungsstabs (100) angebracht zu werden oder anderweitig dazu angepasst ist, daran gekoppelt zu werden, wobei das erste und das zweite Kupplungsteil (114, 140) jeweils ein Steck- bzw. Aufnahmeelement umfassen, die mit zusammenwirkenden Widerhaken oder Zähnen (112,142) versehen sind, **dadurch gekennzeichnet, dass** das erste Kupplungsteil (114) durch relative Axialverschiebung des ersten und des zweiten Armierungsstabs (100,200) ohne Drehung derselben mit dem zweiten Kupplungsteil (140) in Eingriff gebracht werden kann, um den ersten und den zweiten Armierungsstab (100,200) zu koppeln, wobei das zweite Kupplungsteil (140) eine langgestreckte Hülse umfasst, das erste Kupplungsteil (114) ein röhrenförmiges Element umfasst, das dazu angepasst ist, über dem Ende des ersten Armierungsstabs (100) angebracht zu werden und daran befestigt zu werden, zum Beispiel durch Crimpen, Schweißen oder Klebstoff, und wobei das oder jedes Ende der Hülse (140) mit mindestens einem sich axial erstreckenden Schlitz (146) versehen ist, um das radiale Zusammendrücken davon zuzulassen, um zu ermöglichen, dass das erste Kupplungsteil (114) durch jeweilige Axialverschiebung des ersten und des zweiten Kupplungsteils (114,140) mit dem zweiten Kupplungsteil (140) in Eingriff gebracht wird, wobei mindestens ein Abschnitt (115) des ersten Kupplungsteils (114) dazu angepasst ist, über dem Ende des ersten Armierungsstabs (100) aufgenommen zu werden, um das erste Kupplungsteil (114) daran zu befestigen, wobei Widerhaken oder Zähne (142) außen an einem Ende der das zweite Kupplungsteil definierenden Hülse (140) gebildet sind, wobei die Widerhaken oder Zähne (142) mit innen an einem Ende des das erste Kupplungsteil (114) bildenden röhrenförmigen Elements gebildeten zusammenwirkenden Widerhaken oder Zähnen (112) in Eingriff gebracht werden können.

2. Kupplungsanordnung nach Anspruch 1, wobei die zusammenwirkenden Widerhaken oder Zähne (112,142) mit einem Sägezahnprofil gebildet sind, um das Einstecken des zweiten Kupplungsteils (140) in das erste Kupplungsteil (114) zu erleichtern, während sie dem Entfernen des zweiten Kupplungsteils (140) aus dem ersten Kupplungsteil (114), nachdem es darin eingesteckt ist, widerstehen.

3. Kupplungsanordnung nach Anspruch 1, wobei die zusammenwirkenden Widerhaken oder Zähne (112,142) in Form von sich in Umfangsrichtung erstreckenden axial beabstandeten Zähnen oder sich schraubenförmig erstreckenden Gewindegängen sind, die an jeweiligen Enden des ersten und des zweiten Kupplungsteils (114,140) gebildet sind.

4. Kupplungsanordnung nach einem der vorangehenden Ansprüche, wobei die Hülse (140) mit einem Längsschlitz (146) versehen ist, der sich entlang der Länge der Hülse (140) von Ende zu Ende erstreckt.

5. Kupplungsanordnung nach einem der vorangehenden Ansprüche, wobei das zweite Kupplungsteil (140) mittels eines weiteren Kupplungsteils (124), das an dem Ende des zweiten Armierungsstabs (200) angebracht ist, an das Ende des zweiten Armierungsstabs (200) gekoppelt ist.

6. Kupplungsanordnung nach Anspruch 5, wobei das weitere Kupplungsteil (124) und das zweite Kupplungsteil (140) jeweils ein Steck- bzw. ein Aufnahmeelement definieren, die mit zusammenwirkenden Widerhaken oder Zähnen (122,144) versehen sind, wodurch das weitere Kupplungsteil (124) durch relative Axialverschiebung des weiteren und des zweiten Kupplungsteils (124, 140) mit dem zweiten Kupplungsteil (140) in Eingriff gebracht werden kann.

7. Kupplungsanordnung nach Anspruch 6, wobei das weitere Kupplungsteil (124) ein röhrenförmiges Element umfasst, das dazu angepasst ist, über dem Ende des zweiten Kupplungsteils (140) angebracht zu werden und durch zum Beispiel Crimpen, Schweißen oder Klebstoff daran befestigt zu werden.

## Revendications

1. Ensemble d'accouplement servant à accoupler des barres d'armature ou des câbles de précontrainte selon une relation de bout à bout, ledit ensemble comportant une première partie d'accouplement (114) adaptée pour être montée sur une extrémité d'une première barre d'armature (100) et une deuxième partie d'accouplement (140) adaptée pour être montée sur, ou autrement adaptée pour être accouplée à, une extrémité d'une deuxième barre d'armature (200) de manière adjacente par rapport à ladite extrémité de ladite première barre d'armature (100), lesdites première et deuxième parties d'accouplement (114, 140) comportant des éléments mâle et femelle respectifs dotés de crans ou dents de retenue destinés à coopérer (112, 142), **caractérisé en ce que** ladite première partie d'accouplement (114) peut être mise en prise avec ladite deuxième partie d'accouplement (140) à des fins d'accouplement desdites première et deuxième barres d'armature (100, 200) par déplacement axial relatif desdites première et deuxième barres d'armature (100, 200), sans rotation de celles-ci, ladite deuxième partie d'accouplement (140) comportant un manchon allongé, **en ce que** ladite première partie d'accouplement (114) comporte un élément tubulaire adapté pour être monté sur ladite extrémité de ladite première barre d'armature (100) et pour être assujetti sur celle-ci, par exemple par sertissage, soudage ou adhésion, et dans lequel l'extrémité ou chaque extrémité du manchon (140) comporte au moins une fente s'étendant dans le sens axial (146) pour permettre une compression radiale de celle-ci pour permettre à ladite première partie d'accouplement (114) d'être mise en prise avec ladite deuxième partie d'accouplement (140) par déplacement axial respectif desdites première et deuxième parties d'accouplement (114, 140), au moins une portion (115) de ladite première partie d'accouplement (114) étant adaptée pour être reçue sur ladite extrémité de ladite première barre d'armature (100) pour assujettir la première partie d'accouplement (114) sur celle-ci, dans lequel des crans ou dents de retenue (142) sont formés de manière extérieure sur une extrémité dudit manchon (140) définissant ladite deuxième partie d'accouplement, lesdits crans ou dents de retenue (142) étant en mesure d'être mis en prise avec des crans ou dents de retenue destinés à coopérer (112) formés de manière intérieure sur une extrémité dudit élément tubulaire définissant la première partie d'accouplement (114).

2. Ensemble d'accouplement selon la revendication 1, dans lequel lesdits crans ou dents de retenue destinés à coopérer (112, 142) sont formés avec un profil en dents de scie pour faciliter l'insertion de ladite deuxième partie d'accouplement (140) dans ladite première partie d'accouplement (114) tout en résistant au retrait de ladite deuxième partie d'accouplement (140) par rapport à ladite première partie d'accouplement (114) une fois insérée dans celle-ci.

3. Ensemble d'accouplement selon la revendication 1, dans lequel lesdits crans ou dents de retenue destinés à coopérer (112, 142) sont sous la forme de dents espacées dans le sens axial s'étendant dans le sens de la circonférence ou de filets s'étendant de manière hélicoïdale formés sur des extrémités respectives desdites première et deuxième parties d'accouplement (114, 140).

4. Ensemble d'accouplement selon l'une quelconque des revendications précédentes, dans lequel le manchon (140) comporte une fente longitudinale (146) s'étendant sur toute la longueur du manchon (140) d'une extrémité à l'autre extrémité.

5. Ensemble d'accouplement selon l'une quelconque des revendications précédentes, dans lequel ladite deuxième partie d'accouplement (140) est accouplée à ladite extrémité de ladite deuxième barre d'armature (200) au moyen d'une autre partie d'accouplement (124) montée sur ladite extrémité de ladite deuxième barre d'armature (200).

6. Ensemble d'accouplement selon la revendication 5, dans lequel ladite autre partie d'accouplement (124) et ladite deuxième partie d'accouplement (140) définissent des éléments mâle et femelle respectifs comportant des crans ou dents de retenue destinés à coopérer (122, 144), ce par quoi ladite autre partie d'accouplement (124) peut être mise en prise avec ladite deuxième partie d'accouplement (140) par déplacement axial relatif desdites autre et deuxième parties d'accouplement (124, 140).

7. Ensemble d'accouplement selon la revendication 6, dans lequel ladite autre partie d'accouplement (124) comporte un élément tubulaire adapté pour être monté sur ladite extrémité de ladite deuxième partie d'accouplement (140) et pour être assujettie sur celle-ci, par exemple par sertissage, soudage ou adhésion.
